# EUROPEAN PATENT APPLICATION

(11) **EP 3 404 972 A1**
(43) Date of publication of application: **21.11.2018**
(21) Application number: 17171945.3
(22) Date of filing: 19.05.2017
(51) Int. Cl.: H04W 60/04, H04W 48/08, H04W 88/08

(54) **STAND-ALONE CONTROL APPARATUS OUT OF CELLULAR RADIO SYSTEMS**

(71) Applicant: EXFO Oy, 90590 Oulu (FI)
(72) Inventor: Keppainen, Jukka, 90590 Oulu (FI); Toppinen, Hannu, 90590 Oulu (FI)
(74) Representative: Kolster Oy Ab

(57) **Abstract**

A stand-alone control apparatus (100) out of cellular radio systems. The apparatus (100) transmits (130), using one or more radio transceivers (108A), system information with a first area code, and controls (132) a subscriber terminal (140) of a cellular radio system to become connected, using the one or more radio transceivers (108A), based on the transmission (130) of the system information with the first area code. The apparatus (100), after becoming disconnected (134) with the subscriber terminal (140), transmits (136, 136A, 136B), using the one or more radio transceivers (108A, 108B), system information with a second area code, and controls (138, 138A, 138B) the subscriber terminal (140) to become connected, using the one or more radio transceivers (108A, 108B), based on the transmission (136, 136A, 136B) of the system information with the second area code.

## Description

### FIELD

The invention relates to a stand-alone control apparatus out of cellular radio systems.

### BACKGROUND

Stand-alone control apparatuses (operating) out of cellular radio systems are useful for controlling subscriber terminals of cellular radio systems. 'Stand-alone' refers to the fact that the stand-alone control apparatus is not a part of the (real) cellular radio system and it does not provide continuous service for the subscriber terminals and their users. The purpose of the stand-alone control apparatus is to perform radio interface functions required for controlling the subscriber terminal.

### BRIEF DESCRIPTION

The present invention seeks to provide an improved stand-alone control apparatus out of cellular radio systems.

According to an aspect of the present invention, there is provided a control apparatus as specified in claim 1.

According to another aspect of the present invention, there is provided a computer-readable storage medium comprising computer program program code for the stand-alone control apparatus out of cellular radio systems as specified in claim 15.

### LIST OF DRAWINGS

Example embodiments of the present invention are described below, by way of example only, with reference to the accompanying drawings, in which
Figure 1 is a simplified structural diagram of example embodiments of a stand-alone control apparatus;
Figure 2 is a signal sequence chart illustrating example embodiments of communication; and
Figure 3 illustrated cells and their area codes.

### DESCRIPTION OF EMBODIMENTS

The following embodiments are only examples. Although the specification may refer to "an" embodiment in several locations, this does not necessarily mean that each such reference is to the same embodiment(s), or that the feature only applies to a single embodiment. Single features of different embodiments may also be combined to provide other embodiments. Furthermore, words "comprising" and "including" should be understood as not limiting the described embodiments to consist of only those features that have been mentioned and such embodiments may contain also features/structures that have not been specifically mentioned.

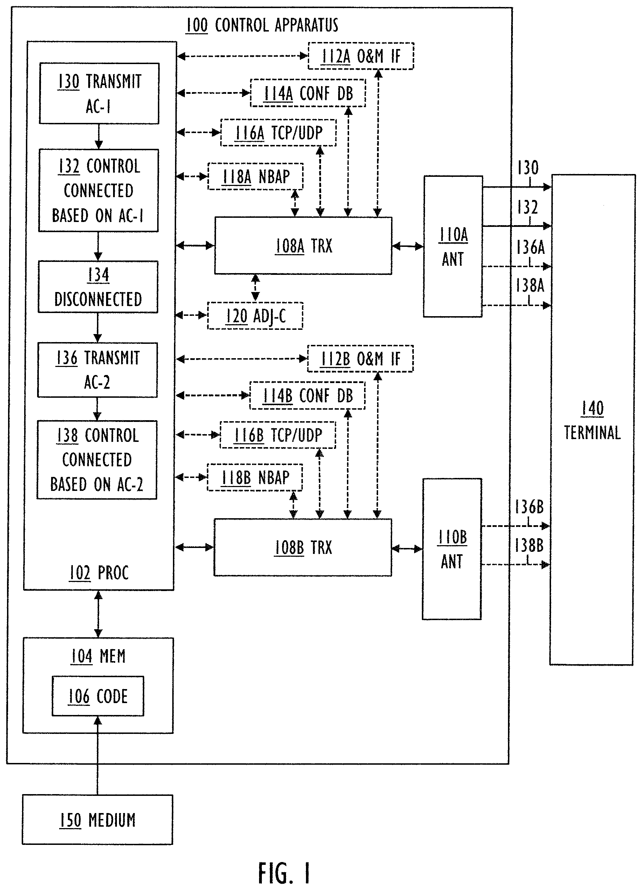

Figure 1 illustrates example embodiments of a stand-alone control apparatus 100 out of cellular radio systems.

The control apparatus 100 may be utilized for various surveillance operations related to a subscriber terminal 140, such as IMSI (International Mobile Subscriber Identity) catching, location tracking etc.

The control apparatus 100 comprises one or more radio transceivers 108A, 108B, one or more processors 102, and one or more memories 104 including computer program code 106.

In an example embodiment, the one or more radio transceivers 108A, 108B are implemented with a software-defined radio (SDR) technology. With SDR technology, the one or more radio transceivers 108A, 108B contain the required radio frequency parts (for example: an antenna 110A, 110B, a low-noise amplifier, band-pass filters, an analog-to-digital converter), but at least some of the traditional hardware components, especially those used for digital signal processing, are implemented with radio interface software running on a processor. Described one or more processors 102 may run the radio interface software, or, alternatively, there may be dedicated processors (not illustrated in Figure 1) coupled with the one or more radio transceivers 108A, 108B for running the radio interface software.

The term 'processor' 102 refers to a device that is capable of processing data. Depending on the processing power needed, the control apparatus 100 may comprise several processors 102 such as parallel processors or multicore processor(s). When designing the implementation of the processor 102, a person skilled in the art will consider the requirements set for the size and power consumption of the control apparatus 100, the necessary processing capacity, production costs, and production volumes, for example.

The term 'memory' 104 refers to a device that is capable of storing data run-time (= working memory) or permanently (= non-volatile memory). The working memory and the non-volatile memory may be implemented by a random-access memory (RAM), dynamic RAM (DRAM), static RAM (SRAM), a flash memory, a solid state disk (SSD), PROM (programmable read-only memory), a suitable semiconductor, or any other means of implementing an electrical computer memory.

The processor 102 and the memory 104 may be implemented by an electronic circuitry. A non-exhaustive list of implementation techniques for the processor 102 and the memory 104 includes, but is not limited to: logic components, standard integrated circuits, application-specific integrated circuits (ASIC), system-on-a-chip (SoC), application-specific standard products (ASSP), microprocessors, microcontrollers, digital signal processors, special-purpose computer chips, field-programmable gate arrays (FPGA), and other suitable electronics structures.

In an example embodiment, the processor 102 may be implemented as a microprocessor implementing functions of a central processing unit (CPU) on an integrated circuit. The CPU is a logic machine executing the computer program code 106. The computer program code 106 may be coded as a computer program using a programming language, which may be a high-level programming language, such as C, C++, or Java, or a low-level programming language, such as a machine language, or an assembler, for example. The microprocessor 102 may also have an operating system (a dedicated operating system of an embedded system, a real-time operating system, or even a general-purpose operating system), which may provide the computer program code 106 with system services.

An example embodiment provides a computer-readable medium 150 comprising the computer program program code 106 for the stand-alone control apparatus 100 out of cellular radio systems. The computer program code 106, when loaded into the control apparatus 100, and executed by the one or more processors 102, causes the control apparatus 100 to perform the described example embodiments. In an example embodiment, the computer program code 106 may be in source code form, object code form, executable file, or in some intermediate form. The computer-readable medium 150 may comprise at least the following: any entity or device capable of carrying computer program code 106 to the control apparatus 100, a record medium, a computer memory, a read-only memory, an electrical carrier signal, a telecommunications signal, and a software distribution medium. In some jurisdictions, depending on the legislation and the patent practice, the computer-readable medium may not be the telecommunications signal. In an example embodiment, the computer-readable medium 150 may be a non-transitory computer-readable storage medium.

The one or more memories 104 and the computer program code 106 are configured to, with the one or more processors 102, cause the control apparatus 100 to transmit 130, using the one or more radio transceivers 108A, system information with a first area code, and control 132 a subscriber terminal 140 of a cellular radio system to become connected, using the one or more radio transceivers 108A, based on the transmission 130 of the system information with the first area code.

In an example embodiment, 'connected' refers to an RRC (Radio Resource Control) connected state.

The one or more memories 104 and the computer program code 106 are configured to, with the one or more processors 102, cause the control apparatus 100 to, after becoming disconnected 134 with the subscriber terminal 140, transmit 136, 136A, 136B, using the one or more radio transceivers 108A, 108B, system information with a second area code, and control 138, 138A, 138B the subscriber terminal 140 to become connected, using the one or more radio transceivers 108A, 108B, based on the transmission 136, 136A, 136B of the system information with the second area code.

In a cellular radio system, a mobile switching centre needs to know in which base station's area the subscriber terminal 140 camps. Because of this, the subscriber terminals 140 transmit an area code update request message including their location whenever they recognize that they have moved to an area with a new area code. As the subscriber terminal 140 is connected to a base station, the base station may request a measurement report, which contains measurement results performed by the subscriber terminal regarding received base stations.

If, as in the present case, a stand-alone control apparatus 100 out of cellular radio systems, is used for controlling the subscriber terminal 140, the connected state of the subscriber terminal 140 should remain until its location etc. are found out. In a GSM cellular radio system, the stand-alone control apparatus 100 may keep up the connected state by transmitting a verification message to the subscriber terminal 140. However, this solution is not possible in the UMTS and LTE cellular radio systems.

The above described sequence, 130-132, 134, and 136-138, enables the connected state to continue long enough so that the location 140 etc. of the subscriber terminal 140 are found out.

In an example embodiment, the control apparatus 100 is configured to set the first area code and the second area code on-the-fly while other configuration of a base station functionality of the control apparatus 100 remains unchanged. 'On-the-fly' refers to the fact that the control apparatus 100 continues to operate, which results in a change of the area code that is fast enough so that the subscriber terminal 140 remains controllable by the control apparatus 100.

In an example embodiment, the area code defines a set of cells or a set of base stations of the cellular radio system.

In an example embodiment, the area code is a Tracking Area Code (TAC) or a Location Area Code (LAC) or a Routing Area Code (RAC).

As explained, the control apparatus 100 comprises one or more radio transceivers 108A, 108B.

In an example embodiment, the control apparatus 100 comprises only one radio transceiver 108A. The only one radio transceiver 108A is configured to first transmit 130 the system information with the first area code, and to subsequently transmit 136A the system information with the second area code. With such sequential operation, only one radio transceiver 108A suffices.

In an example embodiment, the control apparatus 100 is configured to first set the first area code into the system information through an operations and maintenance interface 112A of the only one radio transceiver 108A, and to subsequently set the second area code into the system information through the operations and maintenance interface 112A of the only one radio transceiver 108A.

In an example embodiment, the control apparatus 100 is configured to first set the first area code into the system information using a Transmission Control Protocol (TCP) or a User Datagram Protocol (UDP) 116A for Radio Resource Control (RRC) and Medium Access Control (MAC) layers, and to subsequently set the second area code into the system information using the Transmission Control Protocol or the User Datagram Protocol 116A for the Radio Resource Control and the Medium Access Control layers.

In an example embodiment, the control apparatus 100 is configured to first set the first area code into the system information, using the only one radio transceiver 108A, by transmitting NBAP System Information Update Request 118A comprising the first area code over an Iub interface, and to subsequently set the second area code into the system information, using the only one radio transceiver 108A, by transmitting NBAP System Information Update Request 118A comprising the second area code over the Iub interface.

With the described example embodiments using the operations and maintenance interface, TCP/UDP, or NBAP, the change of the area code may be made on-the-fly.

However, in an alternative example embodiment, the control apparatus 100 is configured to first set the first area code into the system information in a configuration database 114A and restart the only one radio transceiver 108A, and to subsequently set the second area code into the system information in the configuration database 114A and restart the only one radio transceiver 108A.

In an example embodiment, the control apparatus 100 comprises two radio transceivers 108A, 108B, and a first radio transceiver 108A is configured to first transmit 130 the system information with the first area code, and a second radio transceiver 108B is configured to subsequently transmit 136B the system information with the second area code. Here, the operation is also sequential, but it may also be partly or wholly overlapping.

In an example embodiment, the control apparatus 100 is configured to set the first area code into the system information of the first radio transceiver 108A through an operations and maintenance interface 112A of the first radio transceiver 108A, and to set the second area code into the system information of the second radio transceiver 108B through an operations and maintenance interface 112B of the second radio transceiver 108B.

In an example embodiment, the control apparatus 100 is configured to set the first area code into the system information of the first radio transceiver 108A using a Transmission Control Protocol or a User Datagram Protocol 116A for Radio Resource Control and Medium Access Control layers, and to set the second area code into the system information of the second radio transceiver 108B using a Transmission Control Protocol or a User Datagram Protocol 116B for Radio Resource Control and the Medium Access Control layers.

In an example embodiment, the control apparatus 100 is configured to set the first area code into the system information, using one of the two radio transceivers 108A/108B, by transmitting NBAP System Information Update Request 118A/118B comprising the first area code over an Iub interface, and to set the second area code into the system information, using one of the two radio transceivers 108A/108B, by transmitting NBAP System Information Update Request 118A/118B comprising the second area code over the Iub interface.

With the described example embodiments using the operations and maintenance interface, TCP/UDP, or NBAP, the change of the area code may be made on-the-fly also with two radio transceivers.

However, in an alternative example embodiment, the control apparatus 100 is configured to set the first area code into the system information in a configuration database 114A of the first radio transceiver 108A and restart the first radio transceiver 108A, and to set the second area code into the system information in a configuration database 114B of the second radio transceiver 108B and restart the second radio transceiver 108B.

Note that there may also be three or more radio transceivers, 108A, 108B, depending on the planned operation of the control apparatus 100.

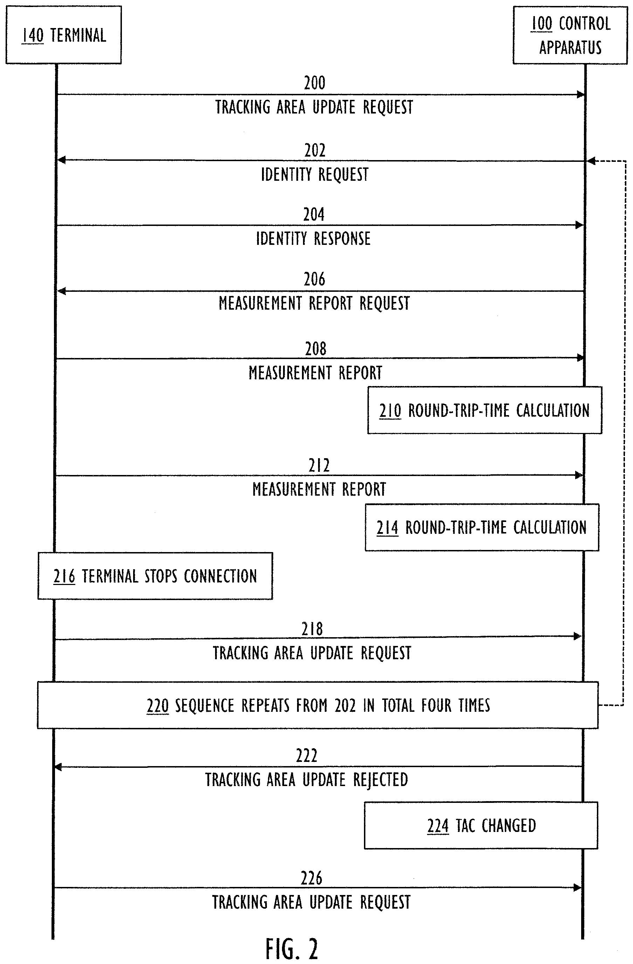

Let us next study Figure 2 illustrating example embodiments of communication.

First (not illustrated in Figure 2), the subscriber terminal 140 detects a fake cell implemented by the control apparatus 100, i.e., the control apparatus transmits system information with a first area code.

The subscriber terminal 140 transmits 202 a tracking area update request to the control apparatus 100.

The control apparatus 100 transmits 200 a identity request, and the subscriber terminal 140 responds 204 with an identity response (including IMSI or IMEI).

The control apparatus 100 transmits 206 a measurement report request, and the subscriber terminal 140 responds 208 with a measurement report, whereupon a round trip time calculation is performed 210 in the control apparatus 100. This is required for generating uplink traffic, so that the control apparatus 100 may perform a direction finding process (related to locating the subscriber terminal 140). The control apparatus 100 may also activate SRS transmission or use other RRC or NAS messages to obtain uplink traffic from the subscriber terminal 140.

The subscriber terminal 140 transmits 212 another measurement report, and the control apparatus 100 performs 214 another round trip time calculation.

The subscriber terminal 140 stays connected 132 from 204 to 214, but in 216 the subscriber terminal 140 stops the connection, i.e., the subscriber terminal 140 becomes disconnected 134.

After becoming disconnected 134, the subscriber terminal transmits a tracking area update request 218, and then the sequence 202-204-206-208-210-212-214 repeats from 202. In an example embodiment, the sequence 202/218-204-206-208-210-212-214-216 may be repeated four times.

After the fourth time, the control apparatus 100 transmits 222 a tracking area update rejected.

After the (tracking) area code is changed from the first area code to the second area code and transmitted in system information in 224, the subscriber terminal 140 transmits 226 a tracking area update request, and a sequence similar to 202-204-206-208-210-212-214-216-218-220 repeats (four times, whereupon a third area code may be taken into use etc.).

In an example embodiment, the control apparatus 100 is configured to repeat the transmission 130 of the system information with the first area code and becoming connected with the subscriber terminal 140 based on the transmission of the system information with the first area code for a predetermined number of times, and to repeat the transmission 136, 136A/136B of the system information with the second area code and becoming connected with the subscriber terminal 140 based on the transmission of the system information with the second area code for a predetermined number of times. The predetermined number of times may in an example embodiment be four as the Applicant has recognized that the subscriber terminal 140 may become connected as described four times, before the subscriber terminal 140 detects a need to change to another base station.

In an example embodiment, the control apparatus 100 is configured to repeat the transmission 136, 136A/136B of the system information with the second area code and becoming connected with the subscriber terminal 140 based on the transmission of the system information with the second area code for a number of times, each time with a different area code than the first area code and the already used second area codes. With this example embodiment it is possible to continue the control for a very long time. The area code may be 16 bits long, for example, meaning that it has 65536 different values. As each value may be used even four times, each time causing a connection of about half a minute, the control may be ongoing as long as practically needed (over 200000 minutes = over 3000 hours).

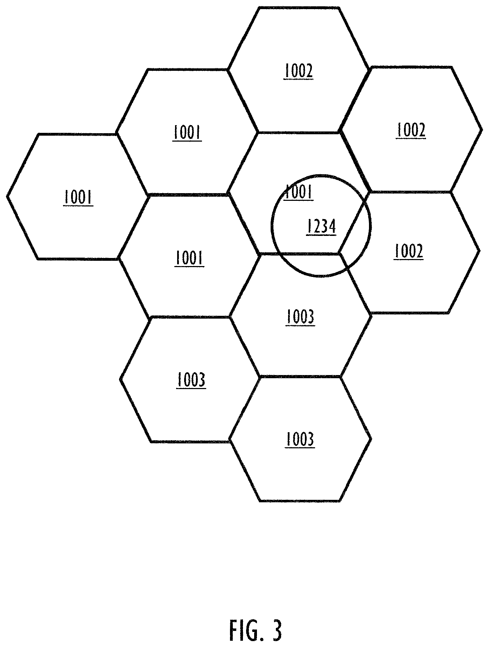

In an example embodiment, the control apparatus 100 is configured to receive 120, using the one or more radio transceivers 108A, 108B, system information from adjacent cells, and to select the first area code and the second code such that they are unused in the adjacent cells. This is illustrated in Figure 3, cells of the real cellular radio network have area codes 1001, 1002 and 1003, whereas the control apparatus 100 creates a cell with an area code of 1234.

It will be obvious to a person skilled in the art that, as technology advances, the inventive concept can be implemented in various ways. The invention and its embodiments are not limited to the example embodiments described above but may vary within the scope of the claims.

## Claims

1. A stand-alone control apparatus (100) out of cellular radio systems comprising:
one or more radio transceivers (108A, 108B);
one or more processors (102); and
one or more memories (104) including computer program code (106),
the one or more memories (104) and the computer program code (106) are configured to, with the one or more processors (102), cause the control apparatus (100) at least to:
transmit (130), using the one or more radio transceivers (108A), system information with a first area code;
control (132) a subscriber terminal (140) of a cellular radio system to become connected, using the one or more radio transceivers (108A), based on the transmission (130) of the system information with the first area code;
after becoming disconnected (134) with the subscriber terminal (140), transmit (136, 136A, 136B), using the one or more radio transceivers (108A, 108B), system information with a second area code, and control (138, 138A, 138B) the subscriber terminal (140) to become connected, using the one or more radio transceivers (108A, 108B), based on the transmission (136, 136A, 136B) of the system information with the second area code.

2. The control apparatus of claim 1, wherein the control apparatus (100) is configured to set the first area code and the second area code on-the-fly while other configuration of a base station functionality of the control apparatus (100) remains unchanged.

3. The control apparatus of any preceding claim, wherein the area code defines a set of cells or a set of base stations of the cellular radio system, and/or the area code is a Tracking Area Code or a Location Area Code or a Routing Area Code.

4. The control apparatus of any preceding claim, wherein the control apparatus (100) comprises only one radio transceiver (108A), the only one radio transceiver (108A) is configured to first transmit (130) the system information with the first area code, and to subsequently transmit (136A) the system information with the second area code.

5. The control apparatus of claim 4, wherein the control apparatus (100) is configured to first set the first area code into the system information through an operations and maintenance interface (112A) of the only one radio transceiver (108A), and to subsequently set the second area code into the system information through the operations and maintenance interface (112A) of the only one radio transceiver (108A).

6. The control apparatus of claim 4, wherein the control apparatus (100) is configured to first set the first area code into the system information using a Transmission Control Protocol or a User Datagram Protocol (116A) for Radio Resource Control and Medium Access Control layers, and to subsequently set the second area code into the system information using the Transmission Control Protocol or the User Datagram Protocol (116A) for the Radio Resource Control and the Medium Access Control layers.

7. The control apparatus of claim 4, wherein the control apparatus (100) is configured to first set the first area code into the system information, using the only one radio transceiver (108A), by transmitting NBAP System Information Update Request (118A) comprising the first area code over an Iub interface, and to subsequently set the second area code into the system information, using the only one radio transceiver (108A), by transmitting NBAP System Information Update Request (118A) comprising the second area code over the Iub interface.

8. The control apparatus of any preceding claim 1 to 3, wherein the control apparatus (100) comprises two radio transceivers (108A, 108B), and a first radio transceiver (108A) is configured to first transmit (130) the system information with the first area code, and a second radio transceiver (108B) is configured to subsequently transmit (136B) the system information with the second area code.

9. The control apparatus of claim 8, wherein the control apparatus (100) is configured to set the first area code into the system information of the first radio transceiver (108A) through an operations and maintenance interface (112A) of the first radio transceiver (108A), and to set the second area code into the system information of the second radio transceiver (108B) through an operations and maintenance interface (112B) of the second radio transceiver (108B).

10. The control apparatus of claim 8, wherein the control apparatus (100) is configured to set the first area code into the system information of the first radio transceiver (108A) using a Transmission Control Protocol or a User Datagram Protocol (116A) for Radio Resource Control and Medium Access Control layers, and to set the second area code into the system information of the second radio transceiver (108B) using a Transmission Control Protocol or a User Datagram Protocol (116B) for Radio Resource Control and the Medium Access Control layers.

11. The control apparatus of claim 8, wherein the control apparatus (100) is configured to set the first area code into the system information, using one of the two radio transceivers (108A/108B), by transmitting NBAP System Information Update Request (118A/118B) comprising the first area code over an Iub interface, and to set the second area code into the system information, using one of the two radio transceivers (108A/108B), by transmitting NBAP System Information Update Request (118A/118B) comprising the second area code over the Iub interface.

12. The control apparatus of any preceding claim, wherein the control apparatus (100) is configured to repeat the transmission (130) of the system information with the first area code and becoming connected with the subscriber terminal (140) based on the transmission of the system information with the first area code for a predetermined number of times, and to repeat the transmission (136, 136A/136B) of the system information with the second area code and becoming connected with the subscriber terminal (140) based on the transmission of the system information with the second area code for a predetermined number of times.

13. The control apparatus of any preceding claim, wherein the control apparatus (100) is configured to repeat the transmission (136, 136A/136B) of the system information with the second area code and becoming connected with the subscriber terminal (140) based on the transmission of the system information with the second area code for a number of times, each time with a different area code than the first area code and the already used second area codes.

14. The control apparatus of any preceding claim, wherein the control apparatus (100) is configured to receive (120), using the one or more radio transceivers (108A, 108B), system information from adjacent cells, and to select the first area code and the second code such that they are unused in the adjacent cells.

15. A computer-readable storage medium (150) comprising the computer program program code (106) of any preceding claim for the stand-alone control apparatus (100) out of cellular radio systems.
